# EUROPEAN PATENT APPLICATION

(11) **EP 1 780 944 A1**
(43) Date of publication of application: **02.05.2007**
(21) Application number: 06122633.8
(22) Date of filing: 20.10.2006
(51) Int. Cl.: H04L 12/24

(54) **Method of detecting an unsatisfactory quality of service and apparatus therefor**

(30) Priority: 26.10.2005 GB 0521785
(71) Applicant: Agilent Technologies, Inc., Santa Clara, CA 95051 (US)
(72) Inventor: Condini, Claudio, South Queensferry, Lothian EH30 9TG (GB); Macartney, John William Forsyth, South Queensferry, Lothian EH30 9TG (GB)
(74) Representative: Coker, David Graeme

(57) **Abstract**

A method of detecting an unsatisfactory quality of service being experienced by users of a communications network (100) comprises a network monitoring system (135) for generating data record feeds (302) concerning traffic generated by the users. A pattern matching engine (304) is provided to recognise repeated failed attempts to establish a call between users of the communications network (100) or repeated calls of impractically short duration. The pattern matching engine (304) generates (506) an alert or alarm in response detection of such usage behaviour from the data record fees.

## Description

The present invention relates to a method of detecting an unsatisfactory quality of service of the type, for example, associated with a first communications service employed by a user in a communications network. The present invention also relates to an apparatus for detecting an unsatisfactory quality of service.

### Backaround Art

In the fields of wireline and wireless communications, services provided by a communications network can become degraded or interrupted due to faults and/or environmental conditions. One known technique used to try to detect quality of service problems is a so-called passive probe technique, where probes are strategically attached via taps to communications links in the communications network and copies of signals traversing the communications links being probed are obtained by the probes for subsequent analysis. However, when a given service, such as a voice service or a data service, is interrupted or degraded below an acceptable level of quality, the problem is not always apparent to the network operator although difficulties are being experienced by a customer of an operator of the communications network. In this respect, quality of service problems are not always directly detectable though analysis of signalling messages. Additionally, it is not always possible or appropriate to dispose certain communications links in the communications network. Consequently, unless the problem being experienced is drawn to the attention of an operator of the communications network, the operator is unaware that a problem exists unless detected by specific diagnostic tools provided with a network monitoring system.

Indeed, in order to draw such undetected problems to the attention of the network operator, a customer of the network operator typically has to log a complaint or provide feedback through a survey. Clearly, surveys do not take place in real-time and logging of complaints may also not be possible in real time if the problem being experienced impedes use of a communications apparatus to log the complaint.

### Disclosure of Invention

According to a first aspect of the present invention, there is provided a method of detecting an unsatisfactory quality of service of a first communications service experienced by a user of a communications network, the method comprising the step of: analysing a communications service usage behaviour associated with the user in response to the unsatisfactory quality of service.

Herein, the skilled person should appreciate that the communications service usage behaviour is indicative of an impediment experienced by the user to communicating data; the data is intended for consumption by the user or a recipient to the user and is distinct from signalling information that accompanies the data, the signalling information being used to support communication of the data between the users.

The first communications service may be a voice service or a data service. The voice service may be a wireless voice service or a wireline voice service. The data service may be a wireless data service or a wireline data service.

The method may further comprise the step of analysing the communications service usage behaviour associated with the user comprises analysing at least one detail record associated with the communications service usage behaviour.

The at least one detail record may be a collection of information about one or more related events that take place in the communications network, for example at least one xDR. For the sake of clarity it should be understood that the term xDR refers to 'X' Detail Records, where 'X' refers to a type of detail record. Consequently, the at least one detail record may be any one or combination of at least one Call Detail Record, at least one Transaction Detail Record or at least one Service Detail Record.

The communications usage behaviour comprises an initial behaviour.

The communications service usage behaviour may comprise the user selecting an alternative communications service to the first communications service, the selection of the alternative communications service following the initial behaviour.

The communications service usage behaviour may comprise the user establishing a call, the call being prematurely terminated and subsequently re-established. The call may be terminated by a calling party or a called party. The communications service usage behaviour may comprise the user using a web-based service, for example making a request to a Uniform Resource Locator (URL).

The alternative communications service may be an alternative voice service or the data service or an alternative data service. The first communications service may be a voice service, for example a wireless voice communications service when the first communications service is not a wireless voice communications service. The alternative communications service may be a wireline voice communications service when the first communications service is not a wireline voice communications service. The data service or the alternative data service may be a Short Messaging Service (SMS), a Multimedia Messaging Service (MMS), an e-mail service, or a web-based service permitting, for example, web browsing.

The initial behaviour may comprise at least two attempts to communicate using the first communications service.

The at least two attempts to communicate using the first communications service may be carried out within a predetermined period of time.

The predetermined time may be a time reflecting an abnormal service usage behaviour in relation to the first communications service. The predetermined period of time may be less than about 15 seconds, for example less than about 10 seconds, such as less than about 7 seconds, less than about 5 seconds, less than about 3 seconds, less than about 2 seconds, or less than about 1 second.

The at least two attempts to communicate using the first communications service may comprise a failed attempt to use a communications service, for example establish a communication, such as a call.

The at least two attempts to communicate using the first communications service may comprise at least one repeated failed attempt to use the communications service, for example a communication establishment attempt, such as call establishment attempt.

The at least two attempts to communicate using the first communications service may comprise a duration indicative of premature termination of use of the communications service, for example a prematurely terminated communication, such as a prematurely terminated call.

The duration may be impractically short to communicate a content, for example voice or data content. The duration may be less than about 5 seconds, for example less than about 3 seconds, such as less than about 2 seconds or less than about 1 second.

The method may further comprise the steps of: analysing communications service usage behaviours respectively associated with a number of users, the communications service usage behaviours associated with the number of users including the communications service usage behaviour associated with the user. The communications service usage behaviours respectively associated with the number of users may be in response to the unsatisfactory quality of service.

The method may further comprise the step of generating an alarm or an alert in response to detection of the unsatisfactory quality of service.

According to a second aspect of the present invention, there is provided a computer program code element comprising computer program code means to make a computer execute the method as claimed in any one of the preceding claims.

The computer program code element may be embodied on a computer readable medium.

According to a third aspect of the present invention, there is provided an apparatus for detecting an unsatisfactory quality of service of a first communications service experienced by a user of a communications network, the apparatus comprising: a processing resource arranged to analyse, when in use, a communications service usage behaviour associated with the user in response to the unsatisfactory quality of service.

According to a fourth aspect of the present invention, there is provided a system for detecting the unsatisfactory quality of service of the first communications service experienced by the user of the communications network, the system comprising: the apparatus as set forth above in relation to the third aspect of the invention; and a network monitoring system.

The network monitoring system may be arranged to generate, when in use, data for the apparatus in order to analyse the communications service usage behaviour.

It is thus possible to provide a method of detecting an unsatisfactory quality of service, and an apparatus and system for detecting an unsatisfactory quality of service that does not require feedback from users of communications equipment in the communications network in order to detect possible faults or poor environmental conditions adversely affecting service performance. Further, in contrast with quality of service problems that are caused by signalling dysfunction and detected by direct analysis of signalling messages, hitherto undetectable quality of service problems caused other than by signalling dysfunction can now be inferred from service usage behaviour discernable, for example, from detail records. Also, detection of the unsatisfactory quality of service can be in real time or near-real time.

### Brief Description of Drawings

At least one embodiment of the invention will now be described, by way of example only, with reference to the accompanying drawings, in which:
Figure 1 is a schematic diagram of a part of a communications network;
Figure 2 is a schematic diagram of an apparatus constituting an embodiment of the invention; and
Figure 3 is a flow diagram for use with the apparatus of Figure 2.

### Detailed Description

Throughout the following description identical reference numerals will be used to identify like parts.

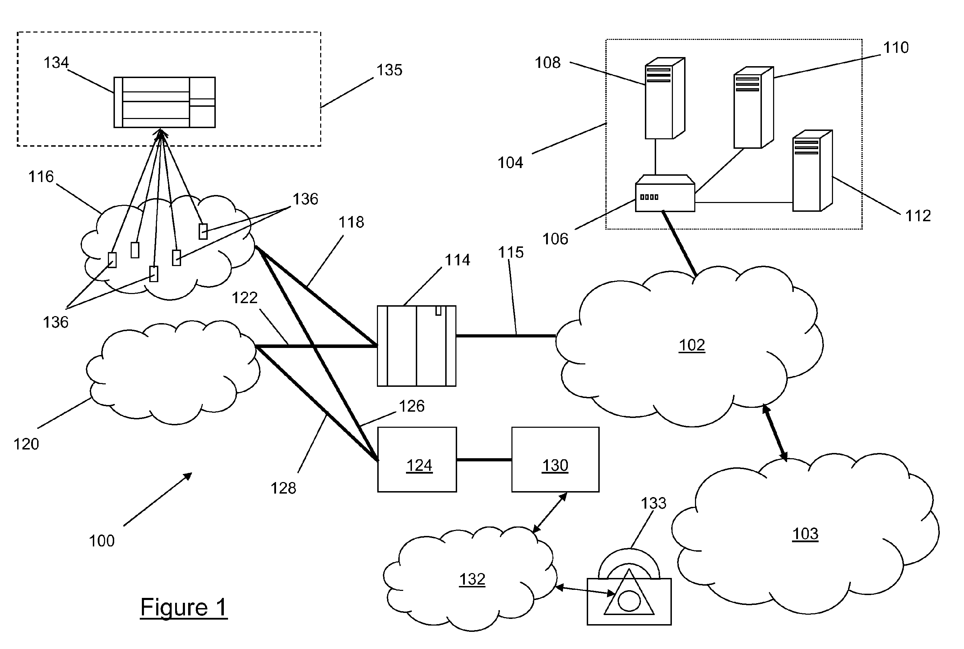

Referring to Figure 1, a communications network 100 comprises an Internet Protocol (IP) backbone network 102, for example an Asynchronous Transfer Mode (ATM) or an Ethernet Local Area Network (LAN). The IP backbone network 102 is coupled to a public Internet 103 and Core Network Support Services 104. The Core Network Support Services 104 comprise, for example, a LAN switch 106 coupled to a node (not shown) in the IP backbone network 102, the LAN switch 106 also being coupled to a Domain Name System (DNS) server 110. For completeness, the LAN switch 106 is also coupled to a Remote Authentication Dial-In User Service (RADIUS) server 108 and a Dynamic Host Configuration Protocol (DHCP) server 112.

The IP backbone network 102 is also coupled to a Serving GPRS (General Packet Radio Service) Support Node (SGSN) 114 by a first link 115. In this example, the SGSN 114 is coupled to a UMTS (Universal Mobile Telecommunications System) Terrestrial Access Network (UTRAN) 116 by a second link 118. The SGSN 114 is also coupled to a GSM/EDGE Radio Access Network (GERAN) 120 by a third link 122. Additionally, the UTRAN 116 and the GERAN 120 are coupled to a Mobile Switching Centre (MSC) 124 by a fourth link 126 and a fifth link 128, respectively. The MSC 124 is coupled to a Gateway MSC 130, the Gateway MSC 130 being coupled to a Public Switched Telephone Network (PSTN) 132. Network terminating equipment, for example a telephone handset 133, is also coupled to the PSTN 132.

In order to monitor traffic in the UTRAN 116, a probe 134 is coupled to a number of links (not shown) in the UTRAN 116 by a corresponding number of strategically located taps 136. Although not shown, another number of taps can be located within the GERAN 120 and coupled to another probe.

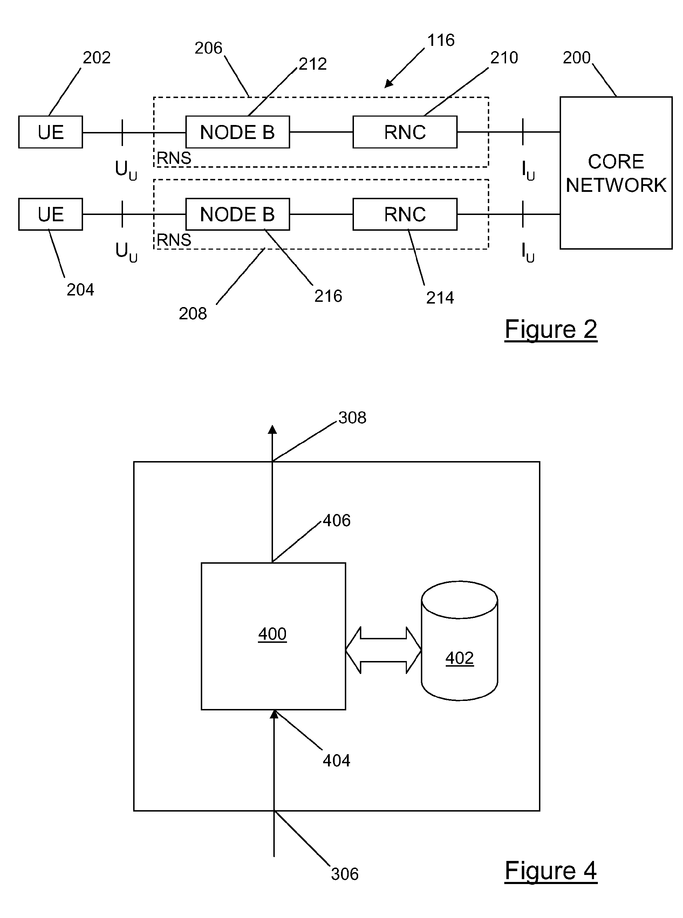

Turning to Figure 2, the UTRAN 116 is coupled to the IP backbone network 102 via the SGSN 114, the IP backbone network 102, the SGSN 114 and (in this example) the MSC 124 constituting a part of a core network 200. The core network 200 communicates with the UTRAN 116 via a first interface, I_{U}. A first User Equipment (UE) unit 202 and a second UE unit 204 are capable of communicating with the core network 200 via the UTRAN 116. The first and second UE units 202, 204 are capable of communicating with the UTRAN 116 via a Radio Frequency (RF) interface, U_{U}.

The core network 200, the UTRAN 116 and the first and second UE units 202, 204 provide an access stratum (not shown) and a non-access stratus (not shown).

The UTRAN 116 comprises a first Radio Network Subsystem (RNS) 206 and a second RNS 208, the first and second RNSs 206, 208 being capable of communicating with the core network 200. The first RNS 206 is also capable of communicating with the first UE unit 202, the second RNS 208 being capable of communicating with the second UE unit 204.

The first RNS 206 comprises a first Radio Network Controller (RNC) 210 capable of communicating with the core network 200 and coupled to a first Node B 212, the first Node B 212 being capable of communicating with the first UE unit 202. The second RNS 208 comprises a second RNC 214 capable of communicating with the core network 200 and coupled to a second Node B 216, the second Node B 216 being capable of communicating with the second UE unit 204.

The first and second UE units 202, 204 are, in this example, multimedia mobile terminals capable of supporting voice and/or data communication services, for example a Short Messaging Service (SMS), a Multimedia Messaging Service (MMS), a web access service, and/or sending e-mail. Of course, other terminal configurations can be employed, for example a mobile terminal that only supports voice services or voice services and basic data services, or a mobile terminal coupled to a mobile computing device, such as a laptop computer or a Personal Digital Assistant (PDA). Alternatively, one or both of the UE units 202, 204 can be any other type of terminal capable of operating in accordance with the UMTS standard and supporting voice and/or data services.

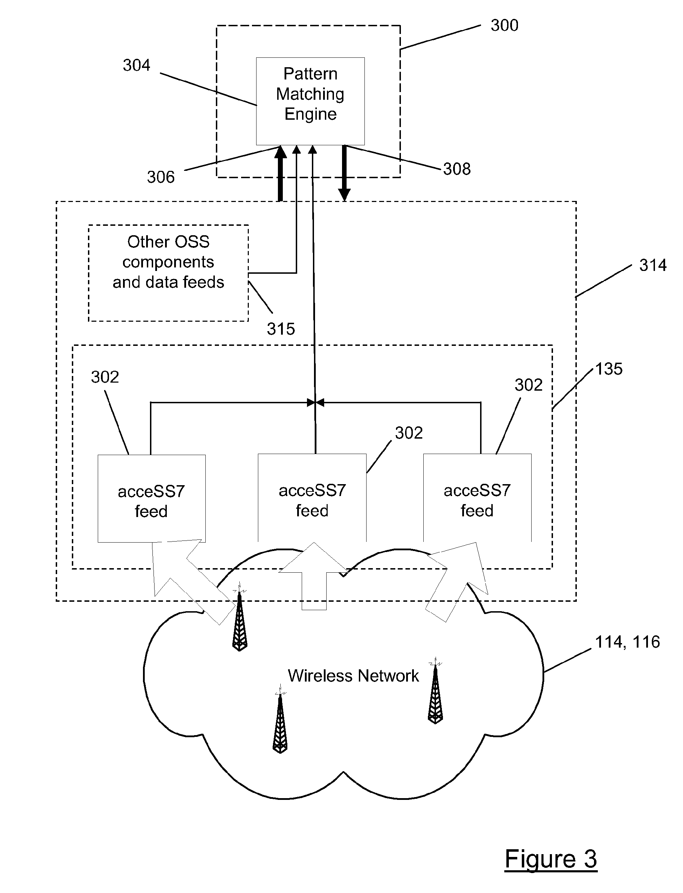

Referring back to Figure 1, the probe 134 is part of an acceSS7 network monitoring system 135 supplied by Agilent Technologies, Inc. that monitors performance at predetermined points in the communications network 100. In this example, the predetermined points are the points of connection of the number of taps 136. Referring to Figure 3, a user behaviour monitoring system 300 is coupled to the acceSS7 system 135 in order to receive data feeds concerning user usage of communications services supported by the communications network, for example detail records, such as Call Detail Record (CDR) feeds, Transaction Detail Record (TDR) feeds and/or so-called Service Usage Record (SUR) feeds 302. In order to provide the detail records feeds 302, the acceSS7 system 135 has, in this example, an Internet Protocol (IP) SUR generation system (not shown) and/or a TDR generation system (not shown) and/or a CDR generation system (not shown) that reside(s) in the probe 134. However, any suitable functional entity can be employed that is capable of generating data that can be used to discern user service usage behaviour.

The user behaviour monitoring system 300 comprises a pattern matching engine 304 having a first input 306 capable of receiving the detail record feeds 302 as well as configuration information to instruct the pattern matching engine 304 as to user behaviours to be identified by the pattern matching engine 304. An output 308 of the pattern matching engine 304 is coupled to network Operations Support Systems (OSS) 314, which generates the configuration information and forwards the detail record feeds 302. The OSS 314 comprises the acceSS7 system 135 as well as other OSS components and data feeds 315.

Whilst, in this example, the user behaviour monitoring system 300 is separate from the acceSS7 network monitoring system 135, but in communication with the acceSS7 system 135 so as to receive the detail record feeds 302 from the acceSS7 system 135, it should be appreciated that the user behaviour monitoring system 300 can be integrated into the acceSS7 system 135.

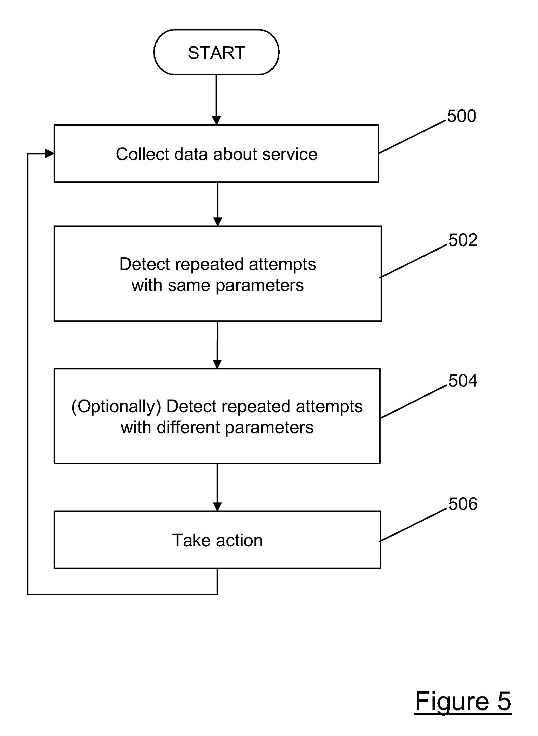

Turning to Figure 4, the pattern matching engine 304 comprises a processing resource, for example a microprocessor 400, coupled to a storage device, for example a hard disc drive, storing a database 402. The microprocessor 400 has a first input 404 coupled to the first input 306 for receiving the detail record feeds 302. An output 406 of the microprocessor 400 is coupled to the output 308 of the pattern matching engine 304.

Whilst the above apparatus has been described in the context of the use of the probe 134, this should be seen as purely exemplary and it should be appreciated that other traffic monitoring measures can be provided by other entities in the communications network 100 to generate data relating to traffic, for example, the SGSN 114, one of the first or second RNCs 210, 214 or the first or second Node Bs 212, 216. The data relating to traffic can be used to generate the detail record feeds 302.

In operation (Figure 5), the probe 134 of the acceSS7 monitoring system 135 generates detail records that are provided to the pattern matching engine 304 as the detail record feeds 302 via the OSSs 314. If available, other data feeds and information can be provided to the pattern matching engine 304 by the other OSS components and data feeds 315, for example data feeds from partner networks and/or CDRs from a network switch. Data concerning the communications of users in the communications network 100 is therefore collected (Step 500) and analysed by the pattern matching engine 304.

Analysis of the detail records involves the pattern matching engine 304 identifying a predetermined communications pattern relating to behaviour of users in relation to communications services supported by the communications network 100. The behaviour is indicative of an impediment to communicating voice and/or data effectively between users; the voice and/or data is intended for consumption by one of the users and is distinct from signalling information that accompanies the voice and/or data, the signalling information being used to support communication of the voice and/or data between the users. The voice and/or data can be perceived by a recipient thereof as content. The behaviour can relate to establishment of calls and/or connections, and/or duration of calls and/or connections. Also, the behaviour to be analysed can include selection of alternative means of communicating by users as a result of unsuccessful attempts to communicate using a first communications service. Typically, to avoid so-called "false positive" results, the pattern matching engine 304 is configured to identify a statistically significant number of instances of a given behaviour pattern to be detected.

The pattern matching engine 304 does not simply perform analysis in relation to only one user or subscriber using the communications network 100, but rather a number of users. Further, the number of users can be identified by the pattern matching engine 304 as being active within a common topological region of the communications network 100, thereby identifying possible regions of the network 100 responsible for poor Quality of Service (QoS) being experienced by users. However, for the sake of simplicity and clarity of description, the analysis will be described in relation to one or two users of the communications network 100, but the skilled person will appreciate that the analysis applies to the number of users as described above.

In a first example, a user of the, wireless, first UE unit 202 is trying to communicate with the user of the, wireless, second UE unit 204. However, if a call cannot be established by the UTRAN 116 between the first and second UE units 202, 204, a pattern of calling behaviour is usually associated with the attempts to communicate between the first and second UE units 202, 204. For example, the user of the first UE unit 202 may repeatedly attempt to establish a call with the second UE unit 204, each attempt failing. Data relating to the repeated (failed) attempts to communicate with the second UE unit 204 are each recorded and available from the acceSS7 system 135 by monitoring the detail record feeds 302. The pattern matching engine 304 is configured to recognise the repeated failed attempts (Step 502) to communicate not only by the first UE unit 202, of course, but by other wireless devices in the communications network 100. The repeated failed attempts to communicate are logged by the pattern matching engine 304 in the database 402 as they are indicative of poor QoS being experienced by the user(s).

However, not all the attempts to communicate using the, first, voice service with the second UE unit 204 necessarily result in complete failure; one or more of the attempts can result in a call being established, but prematurely terminated after a relatively short period of time, resulting in the duration of the call being ineffective for the user of the first UE unit 202 to communicate a message to the user of the second UE unit 204. Indeed, the established call can even be terminated by one of the users of the first or second UE units 202, 204 due to poor sound quality of the established call. Such a pattern of behaviour, i.e. dropping of a call even after successful establishment of the call, is a strong inference of poor quality of service. Again, the pattern matching engine 304 is configured to detect (Step 502) repeated impractically short call durations or a mixture of failed attempts to establish a call and impractically short call durations within a predetermined period of time. The pattern matching engine 304 logs occurrences of such impractically short calls or mixtures of one or more failed attempts to establish a call with one or more impractically short calls in the database 402.

Another user behaviour that is indicative of poor QoS is if, following an initial behaviour of repeated failed attempts to establish a call, or repeated calls of impractically short durations (or a mixture thereof), a number of users logged in the database 402 as exhibiting a suspected service usage behaviour indicative of poor QoS also attempt to communicate using an alternative means of communication. The alternative means of communication is another communications service, different from the first wireless (voice) communications service being used, for example by the user of the first UE unit 202. In this example, the pattern matching engine 304 identifies (Step 504) the number of the users logged in the database attempting to communicate by establishing a call to a land-line, i.e. wireline, telephone number shortly after the repeated attempts to call wireless devices. However, other means of communications can be employed, for example, a Short Messaging Service (SMS), an e-mail service, or even a second generation (2G) voice service, such as is supported by the GERAN 120, provided the first and/or second UE units 202, 204 support the GSM standard.

Converse examples can also be detected by the pattern matching engine 304. A user of a landline voice service can attempt to contact a user of a wireless communications device, albeit unsuccessfully, i.e. failing to establish a call or establishing call of impractically short duration. Repeated attempts to contact the user of the wireless device is recognised by the pattern matching engine 304 and logged in the database 402. This is, in itself, sufficient indication of poor QoS being experienced by the user(s). However, if a given network operator wishes to reduce occurrences of so-called "false-positives", analysis of users attempting to communicate, subsequently, using an alternative communications means can be employed. Consequently, the pattern matching engine 304 is configured to identify attempts to use the alternative means of communication following attempts to communicate with the user of the wireless communications device. Again, the alternative means of communications can be a landline voice service, a data service such as SMS or an e-mail service, or a 2G voice or data service.

In another example, the user of the first UE unit 202 is trying to communicate with the user of the second UE unit 204. However, in this example, the second UE unit 204 is roaming in a foreign, or visited, communications network (not shown). Once again, in respect of communications made to the second UE unit 204, the data feeds concerning user usage can be used to determine user behaviour and hence problems in relation to effective content (as described above) communication. In particular, user behaviour can also be indicative of problems having one or more causes located in the visited communications network. With information, for example a Mobile County Code (MCC), a Mobile Network Code (MNC), and a CeIIID, usually communicated by the visited network (constituting a Visited Public Land Mobile Network (VPLMN)), to the UTRAN 116 (constituting part of a Home Public Land Mobile Network (HPLMN)) it is usually possible to identify a cell in which the problem resides.

In a further example, a user of a host terminal attempts to communicate with a server corresponding to a Universal Resource Locators (URL), but attempts to contact the server are failing. The user consequently sends repeated requests to the server, but the request is either not satisfied at all or only partially, for example due to a fault associated with the DNS 110. In this example, the user is a first, broadband, landline service. The pattern matching engine 304 is configured to detect the repeated attempts to contact the server by the user and other attempts by other users to contact other servers within a topological region of the network 100. The pattern matching engine 304 can also be configured to recognise attempts to communicate with the server alternative communications services, for example a dial-up ISP service or a wireless, such as a cellular, internet access service as opposed to the broadband landline service.

Upon detection of the above described indicators of poor QoS, the pattern matching engine 304 generates (Step 506) an alert or an alarm that is communicated via the output 308 to an OSS application with any pertinent information concerning the location of a possible fault in the communications network 100, for example a range of IP addresses. The OSS application is configured to interface with the pattern matching engine 304 and either generate a further alert to initiate investigation by an engineer of a possible fault, for example by means of a so-called "drive test". The further alert can be used to initiate an automated corrective measure, or initiate an automated diagnostic tool to further investigate the nature of the possible fault. One example of a diagnostic tool is an active monitoring tool that injects synthetic traffic into the communications network100 or a part thereof.

Although the pattern matching engine 304 is described herein as obtaining detail records from the detail record feeds 302, the skilled person will appreciate that the detail records can be retrieved from a store of detail records, for example, a database of detail records stored by the access system 135.

Alternative embodiments of the invention can be implemented as a computer program product for use with a computer system, the computer program product being, for example, a series of computer instructions stored on a tangible data recording medium, such as a diskette, CD-ROM, ROM, or fixed disk, or embodied in a computer data signal, the signal being transmitted over a tangible medium or a wireless medium, for example, microwave or infrared. The series of computer instructions can constitute all or part of the functionality described above, and can also be stored in any memory device, volatile or non-volatile, such as semiconductor, magnetic, optical or other memory device.

## Claims

1. A method of detecting an unsatisfactory quality of service of a first communications service experienced by a user of a communications network (100), the method comprising the step of: analysing (504, 506) a communications service usage behaviour associated with the user in response to the unsatisfactory quality of service.

2. A method as claimed in Claim 1, wherein the step of analysing (504, 506) the communications service usage behaviour associated with the user comprises analysing at least one detail record associated with the communications service usage behaviour.

3. A method as claimed in Claim 2, wherein the at least one detail record is at least one xDR.

4. A method as claimed in any one of the preceding claims, wherein the communications usage behaviour comprises an initial behaviour.

5. A method as claimed in Claim 4, wherein the communications service usage behaviour comprises the user selecting an alternative communications service to the first communications service, the selection of the alternative communications service following the initial behaviour.

6. A method as claimed in Claim 4, wherein the communications service usage behaviour comprises the user establishing a call, the call being prematurely terminated and subsequently re-established.

7. A method as claimed in Claim 4 or Claim 5 or Claim 6, wherein the initial behaviour comprises at least two attempts to communicate using the first communications service.

8. A method as claimed in Claim 7, wherein the at least two attempts to communicate using the first communications service are carried out within a predetermined period of time.

9. A method as claimed in Claim 7 or Claim 8, wherein the at least two attempts to communicate using the first communications service comprise a failed attempt to establish a call.

10. A method as claimed in any one of Claims 7 to 9, wherein the at least two attempts to communicate using the first communications service comprise a duration indicative of a prematurely terminated call.

11. A computer program code element comprising computer program code means to make a computer execute the method as claimed in any one of the preceding claims.

12. An apparatus (304) for detecting an unsatisfactory quality of service of a first communications service experienced by a user of a communications network (100), the apparatus (304) comprising:
a processing resource (400) arranged to analyse, when in use, a communications service usage behaviour associated with the user in response to the unsatisfactory quality of service.

13. A system for detecting the unsatisfactory quality of service of the first communications service experienced by the user of the communications network (100), the system comprising:
the apparatus as claimed in Claim 12; and
a network monitoring system (135).

14. A system as claimed in Claim 13, wherein the network monitoring system (135) is arranged to generate, when in use, data for the apparatus in order to analyse the communications service usage behaviour.
